Europäisches Patentamt

European Patent Office

Office européen des brevets

(11) Veröffentlichungsnummer: **0 077 012**
**B1**

# EUROPÄISCHE PATENTSCHRIFT

(45) Veröffentlichungstag der Patentschrift:
09.04.86

(51) Int. Cl.⁴: **F 16 C 29/04**, G 05 G 3/00

(21) Anmeldenummer: **82109222.8**

(22) Anmeldetag: **06.10.82**

(54) Schiebeelement mit einer, einem labilen Gleichgewicht entsprechenden Position.

(30) Priorität: **13.10.81 DE 3140587**

(43) Veröffentlichungstag der Anmeldung:
**20.04.83 Patentblatt 83/16**

(45) Bekanntmachung des Hinweises auf die Patenterteilung:
**09.04.86 Patentblatt 86/15**

(84) Benannte Vertragsstaaten:
**FR GB IT NL SE**

(56) Entgegenhaltungen:
**FR - A - 1 059 642**
**FR - A - 1 383 427**
**US - A - 3 353 876**

(73) Patentinhaber: **Schwarzbich, Jörg, Ditfurthstrasse 89,
D-4800 Bielefeld 1 (DE)**

(72) Erfinder: **Schwarzbich, Jörg, Ditfurthstrasse 89,
D-4800 Bielefeld 1 (DE)**

(74) Vertreter: **Meldau, Gustav, Dipl.-Ing. et al, Patentanwalt
Dipl.-Ing. Gustav Meldau Dipl.-Phys. Dr. H.-J. Strauss
Postfach 2452, D-4830 Gütersloh 1 (DE)**

LIBER, STOCKHOLM 1986

## Beschreibung

Die Erfindung betrifft ein Schiebeelement mit einer inneren Hülse und einer die innere Hülse übergreifenden und ihr im Querschnitt angepaßten äußeren Hülse, wobei mindestens eine Hülse in Längsrichtung verlaufende Wälzkörperbahnen aufweist, in denen die Hülsen auf Abstand haltende Wälzkörper angeordnet sind und die Hülsen axial zueinander zwischen zwei Endlagen verschiebbar sind.

Schiebeelemente zur Führung von Schubstangen werden zur Steuerung im Maschinenbau häufig eingesetzt. Eine übliche Technik besteht darin, daß rundgeschliffene Schaltstangen mit genauem Durchmesser in Gleitbuchsen mit entsprechendem Kaliber geführt sind, wobei jede Schubstange vorzugsweise von zwei Gleitbuchsen gehalten wird.

Da diese Schubstangen - etwa im Bereich von Textilmaschinen oder bei Schaltgetrieben - mechanische Schalter darstellen, bei denen oft beiden Endlagen einer Schaltstellung entsprechend und zwischen beiden Endlagen eine indifferente Position ist, wird die Länge der Schiebebewegung durch aufgesetzte Ringe, durch angedrehte Sitze o.dgl. begrenzt. Die Herstellung derartiger mechanischer Schalter ist durch die Bearbeitung der Schubstangen und durch die geforderte Genauigkeit der Führungsbuchsen außerordentlich aufwendig. Darüber hinaus ist die Einstellung der Länge des Schiebeweges unter Berücksichtigung auftretender Toleranzen bei jedem der mechanischen Schalter getrennt vorzunehmen.

Hier setzt die Erfindung ein, der die Aufgabe zugrunde liegt, ein gattungsgemäßes Schiebeelement anzugeben, das eine Position aufweist, die einem labilen Gleichgewicht entspricht, wobei eine geringfügige aus dieser Position führende Bewegung das Umspringen des Schiebeelements in die Endlage, die der Bewegungsrichtung entspricht, zur Folge hat. Dabei soll die Lage der Position, die dem labilen Gleichgewicht entspricht, wählbar sein; darüber hinaus soll das Schiebeelement spielfrei und betriebssicher einsetzbar sowie wirtschaftlich herstellbar sein.

Aus dem Stand der Technik (US-A-3 353 876) sind Wälzkörperlager für Längsverschiebungen (axiale Verschiebungen) bekannt, bei denen eine Reibung der längsverschiebenden Teile gegeneinander vermindert werden soll. Eine innere Lagerhülse mit kreisförmigem Querschnitt ist aus federndem Material ausgebildet und mit einem durchgehenden Längsschlitz versehen. Dadurch wird ermöglicht, daß die Lagerbuchse bei der Montage zusammen gebogen werden kann, damit sie zwischen die gleichmäßig über den Umfang verteilten Wälzkörperreihen, die in die äußere starre Lagerbuchse eingeführt sind, eingelegt werden kann und dann unter ihrer Federwirkung die Wälzkörperreihen in die entsprechenden Führungsbahnen in der äußeren und inneren Buchse eindrückt und dort hält. Die Wälzkörper sind gleichmäßig auf dem gesamten Umfang der zylindrischen Lagerbuchsen verteilt, und sie sind in jeder Bahn in größerer Anzahl angeordnet, und insbesondere ist die innere federnde Lagerbuchse flächig aufliegend auf die innere Führungsstange der gegeneinander verschieblichen Teile aufzusetzen. Ein derartiges Wälzkörperlager ist zur Übertragung von Kräften zur Führung bestimmt sowie zur Verhinderung von Gleitreibung und zur Zentrierung der gegeneinander beweglichen Teile. Die vorstehende Aufgabenstellung wird von diesem Stand der Technik nicht berührt.

Zur Lösung der Aufgabenstellung nach der Erfindung ist ein gattungsgemäßes Schiebeelement dadurch gekennzeichnet, daß mindestens eine der beiden Hülsen aus einem federnden Material besteht, einen durchgehenden Längsschlitz aufweist und quer zur Längsrichtung federnd nachgiebig ist und daß in der federnden Hülse etwa gleichweit von dem Längsschlitz entfernt zwei einander gegenüberliegende Bahnen ausgebildet sind, in denen höchstens zwei Wälzkörper angeordnet sind, so daß die Hülsen nach dem Verschieben aus der einen Endlage über die Mittellage hinaus selbsttätig in die andere Endlage umschnappen.

Durch diese Ausbildung wird ein Schiebeelement gebildet, das eine einer labilen Gleichgewichtslage entsprechende Position aufweist, wenn beispielsweise die äußere Hülse in eine gestellfeste Montageplatte formschlüssig eingesetzt wird. Die Lage dieser Position des labilen Gleichgewichts kann dabei durch die Lage der Umfassungsstelle beeinflusst werden: Umgreift die gestellfeste Montageplatte die Hülse formschlüssig in ihrer Mitte, befindet sich die Lage der Position des labilen Gleichgewichts mittig. Bei Seitenverschiebung wird die Lage der Position des labilen Gleichgewichts nach dieser Seite verschoben. Die Länge der Strecke, die notwendig ist, um die verschiebbare Hülse aus der Position des labilen Gleichgewichts zu bringen, hängt dabei vom Druck ab, der durch die formschlüssige Umschließung auf das federnde Element ausgeübt wird, wobei die Lage der Umschließung die Lage dieser Position bestimmt. Sie hängt daneben auch von der Anzahl der in den Wälzkörperräumen vorhandenen Wälzkörpern ab. Befindet sich jeweils ein Wälzkörper im Wälzkörperraum, ist diese Position des labilen Gleichgewichts sehr eng begrenzt. Bei zwei dort angeordneten Wälzkörpern wird die notwendige Länge der Schiebebewegung, die aus dem labilen Gleichgewicht herausführt, größer. Gleiches kann auch erreicht werden, wenn der Abstand zwischen den Wälzkörpern vergrößert wird. Wird nur ein Schiebeelement angewandt, empfiehlt es sich zwei Wälzkörper in jedem Wälzkorperraum vorzusehen. So wird eine Kippgefahr vermindert. Das Einsetzen des Schiebeelements in der vorgesehenen Lage erzeugt einen Kraftfluß, der über die Wälzkörper zur inneren Hülse verläuft, womit der Kraftschluß zwischen der äußeren und der inneren Hülse hergestellt ist. Eine elastische Verspannung der äußeren Hülse hat zur Folge, daß im Bereich der formschlüssigen Aufnahme auf die innere Hülse in beiden Längsrichtungen gleich große sich kompensierende Kräfte wirken; wird diese Position überschritten, gewinnt die eine der Kräfte, nämlich die, deren Richtung mit der Bewegungsrichtung übereinstimmt, die Überhand, die innere Hülse gleitet in die entsprechende Richtung.

Nach einer vorteilhaften Weiterbildung sind daher je zwei Wälzkörper in einer Bahn im Abstand voneinander angeordnet. Es können auch in beiden Hülsen miteinander korrespondierende Bahnen für die Wälzkörper ausgebildet sein. Es ist vorteilhaft, wenn beide Hülsen federnd ausgebildet sind und je einen Längsschlitz aufweisen.

Die Wälzkörper können Kugeln sein, sie können auch als Rollen ausgebildet sein. Die Ausbildung dieser Teile als handelsübliche Teile stellt sicher, daß das Schiebeelement wirtschaftlich hergestellt werden kann.

Nach einer vorteilhaften Weiterbildung ist die Querschnittsform der äußeren Hülse im wesentlichen einem Kreisquerschnitt mit abgeflachten Seiten entsprechend. Eine solche äußere Hülse ist leicht in eine entsprechende Bohrung, die einen Durchbruch in einem Gehäuse darstellt, einzusetzen. Die äußere Hülse hat dazu zweckmäßig an zwei gegenüberliegenden Ecken des Schlitzes nockenförmige Aufbiegungen. Diese Aufbiegungen dienen der Fixierung des Schiebeelements, dazu wird die Bohrung bzw. das zylindrische Loch in der Wandung des Gehäuses mit einer Nut versehen, durch die eine aufgebogene Nocke geführt wird. Nach dem Durchstecken des Schiebeelements kann es dann so verdreht werden, daß beide nockenförmige Aufbiegungen an der Buchsenwand anliegen und die äußere Hülse hinsichtlich möglicher Längsbewegungen sperren.

Zweckmäßig entspricht die Querschnittsform der inneren Hülse im wesentlichen einer Rechteckform, wobei die vier Kanten der inneren Hülse mit über die ganze Länge der Hülse verlaufende zum Hülseninneren gerichteter abgerundeter Kantenverformung versehen sind. Durch diese Wahl des Querschnitts der inneren Hülse ist es möglich, verschiebbare Schaltstangen mit rechteckigem Querschnitt einzusetzen. Darüber hinaus hat diese Hülsenform den wesentlichen Vorteil, daß die eingesetzten rechteckigen Schaltstangen derart eingesetzt werden können, daß die beiden Seitenteile mit den Wälzkörperbahnen frei liegen. Dadurch ist eine elastische Verformung dieser Seitenteile möglich ohne daß die Schaltstange in diesem Bereich auszuarbeiten ist. Darüber hinaus wird die Stabilität der inneren Hülse durch die Wahl dieses Querschnittes wesentlich erhöht, was der Betriebssicherheit des Schiebeelementes zugute kommt.

Zweckmäßig ist mindestens eine Hülse aus Stahl und zwar vorzugsweise aus Federstahl hergestellt. Mindestens eine Hülse kann durch Winkeln und Biegen von Bandmaterial hergestellt sein. Die Ausbildung der Hülse aus Federstahl stellt deren Elastizität sicher; die Wirkungsweise des Schiebeelementes wird durch die eigene innere Elastizität sichergestellt. Da die Wirkungsweise des Schiebeelements auf nur geringfügigen Verformungen einer der Hülsen oder deren Wandteile beruht, ist es nicht notwendig, daß diese Hülsen aus besonders hochwertigen Federstählen gefertigt sind. Die geringfügigen Verformungen auf denen die Wirkungsweise des Schiebeelements beruht, überschreiten auch bei Stahl, Federmessing o.dgl. nicht die Grenzen des elastischen Bereichs, eine unelastisch bleibende Verformung ist nicht zu befürchten. Durch die Herstellung der Hülse mittels Winkeln und Biegen von Bandmaterial ist sichergestellt, daß auch eine Massenproduktion einfach und wirtschaftlich durchführbar ist. In weiterer Ausbildung wird vorgeschlagen, daß mindestens eine Hülse des Schiebeelements ein Kunststoffteil, vorzugsweise ein Spritzgußteil ist.

Bei der Verwendung von Schiebeelementen der vorstehend beschriebenen Art zur Begrenzung des Verschiebeweges und zur Führung von verschiebbaren Schaltstangen, welche mit Einrückklauen zusammenwirken, wobei die Schaltstangen in Durchbrüchen von Wänden eines Gehäuses verschiebbar gelagert sind, sind erfindungsgemäß die Laufbahnen mindestens in einer Richtung begrenzt, wobei die äußeren Hülsen in den Wänden abgestützt und die inneren Hülsen mit der Schaltstange gekuppelt sind. Dadurch ist ein einfacher Aufbau von Schalteinrichtungen ermöglicht, vorzugsweise für Textilmaschinen und/oder mechanische Antriebe, beispielsweise Kraftfahrzeuggetriebe, bei denen ein Ausrücken, ein Umschalten oder sonstige mit Schubbewegung verbundene Schaltbewegungen durchzuführen sind. Die Schaltstangen werden dabei von den spielfreien Schiebeelementen einwandfrei geführt; die Schaltwege sind begrenzbar; eine einem labilen Gleichgewicht entsprechende Neutrallage gestattet auch die Verwendung von Schiebehülsen wenn beide Endlagen der Schaltstange als Schaltpositionen benötigt werden.

In besonderen Fällen kann die innere Hülse auch die Schaltstange selbst sein, die mit entsprechenden Wälzkörperbahnen versehen ist und über die die äußere Hülse vor dem Einbringen in die formschlüssige Umschließung gesteckt wird. Ein solches Vorgehen ist möglich, da die äußere Hülse aufgrund ihres Schlitzes und aufgrund ihrer Elastizität eine derartige Verformung gestattet.

Die Erfindung wird nachstehend anhand von Ausführungsbeispielen mit bezug auf die Zeichnungen näher erläutert. In den Zeichnungen zeigen

Figur 1 ein in eine Montageplatte eingesetztes Schiebeelement

Figur 2 einen axialen Längsschnitt durch das Schiebeelement (mit geschnittener innerer Hülse)

Figur 3 einen Querschnitt durch die innere und äußere Hülse

Figur 4 den Einsatz von Schiebeelementen zur Führung einer Schaltstange eines umschaltbaren und/oder ausrückbaren mechanischen Antriebs.

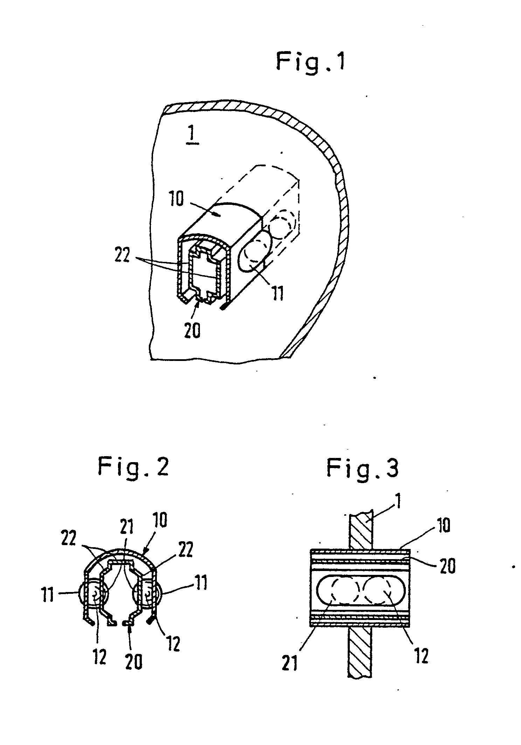

Im einzelnen zeigt die Figur 1 eine perspektivische Schemadarstellung einer Ausführungsform des erfindungsgemäßen Schiebeelements. Dieses Schiebeelement 10 ist in die Montagewand 1 eines Gehäuses eingesetzt, und zwar etwa mittig. Dazu besitzt die Montagewand 1 einen der Form des Schiebeelements angepaßten Durchbruch, in dem das Schiebeelement formschlüssig gehalten ist. Die Oberseite des Schiebeelements 10 ist gewölbt ausgebildet; sie geht in die geraden und an ihrem unteren Ende abgekanteten Seitenwände über, die mit den Wälzkörperbahnen 11 versehen sind. Im Inneren der äußeren Hülse 10 ist die innere Hülse 20 angeordnet, deren korrespondierende Seiten 22 mit in entgegengesetzter Weise ausgedrückten Wälzkörperbahnen 21 versehen sind. Beide Hülsen 10 und 20 sind, wie dargestellt, in Längsrichtung geschlitzt. Dabei hat der Schlitz 30 der inneren Hülse 20 geringe Weite; der Schlitz 40 der äußeren Hülse 10 ist unverhältnismäßig viel breiter. Allerdings wird - wie bei der dargestellten Ausführungsform möglich - beim formschlüssigen Einfügen einer rechteckigen Schaltstange der Schlitz 30 der inneren Hülse 20 aufgeweitet. In diesem Zusammenhang wird betont, daß formschlüssig sich nur auf den zwischen den unteren und den oberen Teilen der inneren Hülse 20 befindlichen Rechteckraum bezieht. Die ausgedrückten Seiten 22 - in die zum Inneren hin die Wälzkörperbahnen eingearbeitet sind, liegen gegenüber der Schaltstange hohl.

Andere "Einspannungen" der äußeren Hülse sind naturgemäß denkbar. Dann verlagert sich die Position der Lage, in der das Schiebeelement in einem labilen Gleichgewicht ist. Bei der Verwendung nur eines Wälzkörpers 12 in jedem Wälzkörperraum wird die Wegstrecke, die notwendig ist, um das labile Gleichgewicht zu überwinden, ausserordentlich kurz; diese Wegstrecke kann verlängert werden durch die Anwendung von zwei Wälzkörpern 12, oder durch Einfügen eines Wälzkörperkäfigs, in dem die Wälzkörper 12 entsprechenden Abstand voneinander haben.

Die Figuren 2 und 3 zeigen eine Frontansicht und eine Seitenansicht des erfindungsgemäßen Schiebeelements. Dabei wurde in Fig.2 der Deutlichkeit halber die Gehäusewand 1 weggelassen. Die äußere Hülse 10 besitzt eine etwa U-förmige Gestalt, wobei die der offenen Seite des U's zugewandten Kanten mit Abbiegungen 13 versehen sind. Die innere Hülse 20 ist in ihrer Grundform rechteckig; die einander gegenüberliegenden Seitenwände 22, die zu den flachen Wänden der U-förmigen äußeren Hülse 10 korrespondieren, sind gegenüber der Rechteckform ausgedrückt. In den Wänden 22 befinden sich die Wälzkörperbahnen 21, zu denen korrespondierende, gegenüberliegende, in den flachen Wänden des U-förmigen Profils der äußeren Hülse 10 vorgesehene Wälzkörperbahnen 11 vorhanden sind. Je eine Wälzkörperbahn 21 und die dazu korrespondierende Wälzkörperbahn 11 bilden einen Wälzkörperraum; in jedem der Wälzkörperräume sind Wälzkörper 12 vorgesehen. Die Seitenansicht zeigt dies in ähnlicher Weise: In der Gehäusewand 1 befindet sich die äußere Hülse 10, in der sich die innere Hülse 20 in ihrer Neutralposition befindet. Im Schnitt ist nur eine der Wälzkörperbahnen, nämlich die Wälzkörperbahn 21 der inneren Hülse zu erkennen; die verdeckten Wälzkörper 12 sind gestrichelt angedeutet.

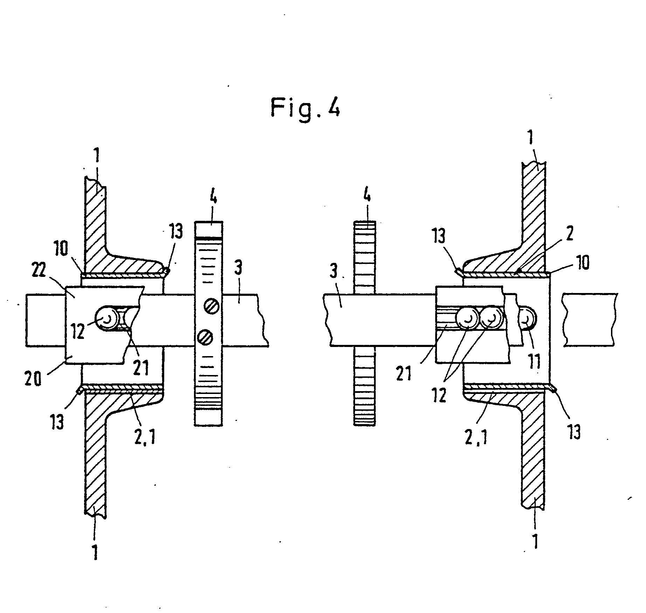

Die Figur 4 zeigt ein Ausführungsbeispiel, bei dem in zwei Gehäusewänden 1 je ein Schiebeelement vorgesehen ist. Die Schaltstange 3 mit einem außerhalb der Figur liegenden, nicht dargestellten Antrieb wird um eine bestimmte Weglänge verschoben. In der Darstellung befindet sie sich in ihrer linken Anschlagposition, dies ist an der Stellung der inneren Hülse 20 gegenüber der äußeren Hülse 10 erkennbar, wobei die Wälzkörper 12 bei der links dargestellten Hülse am Ende der Wälzkörperbahn angekommen sind. In dieser Position ist eine der Einrückgabeln 4 im eingerückten Zustand und wirkt mit dem nicht dargestellten zu schaltenden, mechanischen Element zusammen. Wird die Schaltstange 3 nach rechts bewegt, gelangt sie in ihre Neutralposition, aus der sie, wenn in gleicher Richtung fortbewegt, in die andere Endlage umspringt. Dabei legen sich die Wälzkörper 12 des rechten Schiebeelements gegen das Ende der Wälzkörperbahn 11 dieses Schiebeelements. In dem dargestellten Fall sind die Montagewände 1 mit einem Aufnahmekonus versehen, der einen kreisrunden Querschnitt hat. Diese Ausbildung gestattet ein Festlegen der Schiebeelemente mittels angeformter Nocken 13. Um das Einschieben mit der angeformten Nocke 13 zu ermöglichen, ist in der Bohrung eine Nut 2.1 vorgesehen. Durch diese Nut wird die auf der Gegenseite festzulegende Nocke geschoben; nach Durchschieben der äußeren Hülse wird diese verdreht und beide Nocken sperren die weitere Längsbewegung der äußeren Hülse.

Das Schiebeelement nach der Erfindung ist außerordentlich vielseitig einsetzbar. Es ist nicht unbedingt notwendig, daß die Formschlüssigkeit der äußeren Hülse mit der Montageplatte um den ganzen Umfang gegeben sein muß. Es ist vielmehr vorteilhaft, die mit den Wälzkörperbahnen versehenen Seitenwände freistehend aus der formschlüssigen Verbindung auszunehmen. Dabei ist eine bevorzugte Ausbildung der Ausnehmung die, daß diese Ausnehmung genau den Umkreis für die äußere Hülse des Schiebeelements darstellt. Damit sind die geraden Seitenwände von vornherein freigestellt und es ist Raum für die Ausprägung der Wälzkörperbahnen gegeben. Ausnehmungen mit Kreisquerschnitt sind dabei durch Bohren, gegebenenfalls auch mit Nacharbeiten in einfacher Weise und somit wirtschaftlich herstellbar.

Ähnliches gilt - wie oben bereits ausgeführt - für die Lagerung der Schaltstange in der inneren Hülse. Von Bedeutung ist auch der in Längsrichtung verlaufende Spalt der inneren Hülse: Bei nicht eingeführter Schaltstange stützen sich beide Seiten gegeneinander ab, die Spaltweite ist nahe zu Null-Null. Trotzdem kann die innere Hülse nicht so weit verformt werden, daß die Wälzkörper aus dem Wälzkörperraum fallen können. Dieser Spalt erlaubt auch ein Untermaß des Aufnahmequerschnitts für die Schaltstange; das formschlüssige Einschieben der Schaltstange hat dann lediglich ein Öffnen des Spaltes zur Folge. Das Einhalten extrem genauer Abmessungen und kleiner Toleranzen wird somit überflüssig.

## Patentansprüche

1. Schiebeelement mit einer inneren Hülse (20) und einer die innere Hülse übergreifenden und ihr im Querschnitt angepaßten äußeren Hülse (10), wobei mindestens eine Hülse in Längsrichtung verlaufende Wälzkörperbahnen (11) aufweist, in denen die Hülsen auf Abstand haltende Wälzkörper (12) angeordnet sind und die Hülsen axial zueinander zwischen zwei Endlagen verschiebbar sind, dadurch gekennzeichnet, daß mindestens eine der beiden Hülsen (10, 20) aus einem federnden Material besteht, einen durchgehenden Längsschlitz (30) bzw. (40) aufweist und quer zur Längsrichtung federnd nachgiebig ist, und daß in der federnden Hülse etwa gleichweit von dem Längsschlitz entfernt zwei einander gegenüberliegende Bahnen (11) bzw. (21) ausgebildet sind, in denen höchstens zwei Wälzkörper (12) angeordnet sind, so daß die Hülsen (10) bzw. (20) nach dem Verschieben aus der einen Endlage über die Mittellage hinaus selbsttätig in die andere Endlage umschnappen.

2. Schiebeelement nach Anspruch 1, dadurch gekennzeichnet, daß bei Anordnung von je zwei Wälzkörpern (12) in einer Bahn (11) bzw. (21) diese Wälzkörper im Abstand voneinander angeordnet sind.

3. Schiebeelement nach Anspruch 1 und 2, dadurch gekennzeichnet, daß in beiden Hülsen (10) bzw. (20) miteinander korrespondierende Bahnen (11) und (21) für die Wälzkörper (12) ausgebildet sind.

4. Schiebeelement nach Anspruch 1, dadurch gekennzeichnet, daß beide Hülsen (10) und (20) federnd ausgebildet sind und je einen Längsschlitz (30) bzw. (40) aufweisen.

5. Schiebeelement nach Anspruch 1, dadurch gekennzeichnet, daß die Wälzkörper (12) Kugeln sind.

6. Schiebeelement nach Anspruch 1, dadurch gekennzeichnet, daß die Wälzkörper (12) Rollen sind.

7. Schiebeelement nach einem der vorstehenden Ansprüche, dadurch gekennzeichnet, daß die Querschnittsform der äußeren Hülse (10) im wesentlichen einem Kreisquerschnitt mit abgeflachten Seiten entspricht.

8. Schiebeelement nach Anspruch 6, dadurch gekennzeichnet, daß die äußere Hülse (10) an zwei gegenüberliegenden Ecken des Schlitzes (40) nockenförmige Aufbiegungen (13) aufweist.

9. Schiebeelement nach Anspruch 1 sowie einem oder mehreren der vorstehenden Ansprüche, dadurch gekennzeichnet, daß die Querschnittsform der inneren Hülse (20) im wesentlichen einer Rechteckform entspricht.

10. Schiebeelement nach Anspruch 7, dadurch gekennzeichnet, daß die vier Kanten der rechteckförmigen inneren Hülse (20) mit über die ganze Länge der Hülse verlaufender zum Hülseninneren gerichteter abgerundeter Kantenverformung versehen sind.

11. Schiebeelement nach einem der vorstehenden Ansprüche, dadurch gekennzeichnet, daß mindestens eine Hülse (10) bzw. (20) aus Stahl, vorzugsweise aus Federstahl besteht.

12. Schiebeelement nach einem der vorstehenden Ansprüche, dadurch gekennzeichnet, daß mindestens eine Hülse (10; 20) durch Winkeln und Biegen von Bandmaterial hergestellt ist.

13. Schiebeelement nach einem der Ansprüche 1 bis 8, dadurch gekennzeichnet, daß mindestens eine Hülse (10;20) des Schiebeelements ein Kunststoffteil, vorzugsweise ein Spritzgußteil ist.

14. Verwendung von Schiebeelementen nach einem der Ansprüche 1 bis 13 zur Begrenzung des Verschiebeweges und zur Führung von verschiebbaren Schaltstangen (3), welche mit Einrückklauen zusammenwirken, wobei die Schaltstangen (3) in Durchbrüchen von Wänden (1) eines Gehäuses verschiebbar gelagert sind, dadurch gekennzeichnet, daß die Bahnen (11) bzw. (21) mindestens in einer Richtung begrenzt sind, wobei die äußeren Hülsen (10) in den Wänden (1) abgestützt und die inneren Hülsen (20) mit der Schaltstange (3) gekoppelt sind.

## Claims

1. A slideable element having an inner sleeve (20) and an outer sleeve (10) projecting over the inner sleeve and baing adapted in its cross section to it, whereby at least one sleeve is provided with roll body tracks (11) extending in a longitudinal direction, in which the sleeves are arranged on spaced roll bodies (12) and are axially displaceable with respect to each other between two limit positions, characterized in that at least one of the sleeves (10, 20) is fabricated from a resilient material, is provided with a through-passing longitudinal slot (30) or (40), resp., and is elastically suspended laterally to the longitudinal direction, and that two opposite tracks (11) or (21), resp., are provided in the resilient sleeve at approximately equal distance from the longitudinal slot, in which at most two roll bodies (12) are arranged, such that the sleeves (10) or (20), resp., snap automatically from one limit position over the centre position into the other limit position after being slid.

2. A slideable element according to claim 1, characterized in that, in the case of two roll bodies (12) each being arranged in one track (11) or (21), resp., said roll bodies are arranged spaced from each other.

3. A slideable element according to claim 1 or 2, characterized in that in both sleeves (10) or (20), resp., tracks (11) and (21) corresponding to each other are arranged for the roll bodies (12).

4. A slideable element according to claim 1, characterized in that both sleeves (10) and (20) are resilient and each exhibit one longitudinal slot (30) or (40), resp.

5. A slideable element according to claim 1, characterized in that the roll bodies (12) are balls.

6. A slideable element according to claim 1, characterized in that the roll bodies (12) are rollers.

7. A slideable element according to any one of the preceding claims, characterized in that the cross-sectional shape of the outer sleeve (10) essentially corresponds to a circular cross section having flat sides.

8. A slideable element according to claim 6, characterized in that the outer sleeve (10) is provided on two opposite corners of the slot (40) with cam-shaped bends (13).

9. A slideable element according to claim 1 as well as to one or more of the preceding claims, characterized in that the cross-sectional shape of the inner sleeve (20) is essentially rectangular.

10. A slideable element according to claim 7, characterized in that the four edges of the rectangular inner sleeve (20) are provided with a rounded edge deformation extending throughout the length of the sleeve and being directed towards the interior of the sleeve.

11. A slideable element according to any one of the preceding claims, characterized in that at least one sleeve (10) or (20), resp., consists of steel, preferably spring steel.

12. A slideable element according to any one of the preceding claims, characterized in that at least one sleeve (10) or (20), resp., is fabricated by angling and bending of sheet material.

13. A slideable element according to any one of the claims 1 to 8, characterized in that at least one sleeve (10, 20) of the sliding element is a plastic part, preferably a moulded part.

14. The use of slideable elements according to any one of the claims 1 to 13 for limiting the displacement course and for guiding displaceable gearshift bars (3) being in engagement with engaging claws, the gearshift bars (3) being borne displaceably in openings of walls (1) of a housing, characterized in that the tracks (11) or (21), resp., are limited in at least one direction, the outer sleeves (10) being supported in the walls (1) and the inner sleeves (20) being coupled to the gearshift bar (3).

## Revendications

1. Ensemble coulissant comprenant une douille interne (20) et une douille externe (10) qui emprisonne la douille interne et présente une section qui lui est adaptée, au moins une douille comportant des pistes de roulement (11) s'étendant dans le sens longitudinal et logeant des corps de roulement (12) maintenant les douilles à distance, lesdites douilles pouvant coulisser axialement l'une par rapport à l'autre, entre deux positions extrêmes, caractérisé par le fait qu'au moins l'une des deux douilles (10, 20) consiste en un matériau élastique, comporte une fente longitudinale ininterrompue (30 ou 40, respectivement) et peut céder élastiquement perpendiculairement à la direction longitudinale; et par le fait que deux pistes (11 ou 21, respectivement) mutuellement opposées sont ménagées dans la douille élastique, sensiblement à une même distance de la fente longitudinale, pistes dans lesquelles au maximum deux corps de roulement (12) sont disposés de telle sorte que, après avoir coulissé à l'écart de l'une des positions extrêmes, les douilles (10 ou 20, respectivement) parviennent automatiquement par déclic à l'autre position extrême, en franchissant la position centrale.

2. Ensemble coulissant selon la revendication 1, caractérisé par le fait que, lorsque deux corps respectifs de roulement (12) se trouvent dans une piste (11 ou 21, respectivement), ces corps de roulement sont disposés à distance l'un de l'autre.

3. Ensemble coulissant selon les revendications 1 et 2, caractérisé par le fait que des pistes (11 et 21), destinées aux corps de roulement (12) et se correspondant mutuellement, sont façonnées dans les deux douilles (10 ou 20, respectivement).

4. Ensemble coulissant selon la revendication 1, caractérisé par le fait que les deux douilles (10 et 20) sont réalisées élastiques et présentent chacune une fente longitudinale (30 ou 40, respectivement).

5. Ensemble coulissant selon la revendication 1, caractérisé par le fait que les corps de roulement (12) sont des billes.

6. Ensemble coulissant selon la revendication 1, caractérisé par le fait que les corps de roulement (12) sont des rouleaux.

7. Ensemble coulissant selon l'une des revendications précédentes, caractérisé par le fait que la forme de la section de la douille externe (10) correspond, pour l'essentiel, à une section circulaire à côtés aplatis.

8. Ensemble coulissant selon la revendication 6, caractérisé par le fait que la douille externe (10) comporte des cintrages (13) en forme de cames sur deux coins opposés de la fente (40).

9. Ensemble coulissant selon la revendication 1 ainsi que l'une ou plusieurs des revendications précédentes, caractérisé par le fait que la forme de la section de la douille interne (20) correspond pour l'essentiel à une forme rectangulaire.

10. Ensemble coulissant selon la revendication 7, caractérisé par le fait que les quatre arêtes de la douille interne rectangulaire (20) sont pourvues d'une déformation arrondie, s'étendant sur toute la longueur de la douille et dirigée vers l'intérieur de cette douille.

11. Ensemble coulissant selon l'une des revendications précédentes, caractérisé par le fait qu'au moins une douille (10 ou 20, respectivement) consiste en de l'acier, de préférence en de l'acier à ressorts.

12. Ensemble coulissant selon l'une des revendications précédentes, caractérisé par le fait qu'au moins une douille (10; 20) est produite par coudage et cintrage d'un matériau en bande.

13. Ensemble coulissant selon l'une des revendications 1 à 8, caractérisé par le fait qu'au moins une douille (10; 20) de cet ensemble coulissant est une pièce en matière plastique, de préférence une pièce moulée par injection.

14. Utilisation d'ensembles coulissants selon l'une des revendications 1 à 13 pour limiter la course de coulissement et pour guider des tiges de commutation coulissantes (3) coopérant avec des griffes d'embrayage, ces tiges de commutation (3) étant montées coulissantes dans des perforations de parois (1) d'un boîtier, caractérisée par le fait que les pistes (11 ou 21, respectivement) sont limitées au moins dans une direction, les douilles externes (10) prenant appui dans les parois (1), et les douilles internes (20) étant accouplées à la tige de commutation (3).

# Fig.1

# Fig.2

# Fig.3

# Fig. 4